# EUROPÄISCHE PATENTANMELDUNG

(11) **EP 3 305 921 A1**
(43) Veröffentlichungstag der Anmeldung: **11.04.2018**
(21) Anmeldenummer: 16192811.4
(22) Anmeldetag: 07.10.2016
(51) Int. Cl.: C22B 3/00, C22B 11/06, C22B 7/00

(54) **VERFAHREN ZUR ABTRENNUNG VON EDELMETALL AUS GROBEN PORÖSEN FORMKÖRPERN AUS EDELMETALLHALTIGEM REFRAKTÄRMATERIAL**

(71) Anmelder: Heraeus Deutschland GmbH & Co. KG, 63450 Hanau (DE)
(72) Erfinder: Röder, Jan, 63579 Freigericht (DE); Kraushaar, Christian, 63517 Rodenbach (DE); Röhlich, Christoph, 63456 Hanau (DE); Winkler, Holger, 64291 Darmstadt (DE)
(74) Vertreter: Heraeus IP

(57) **Zusammenfassung**

Verfahren zur Abtrennung von Edelmetall aus groben porösen Formkörpern aus edelmetallhaltigem Refraktärmaterial umfassend die Schritte:
(1) Bereitstellen von groben porösen Formkörpern aus edelmetallhaltigem Refraktärmaterial,
(2) Inkontaktbringen der in Schritt (1) bereitgestellten, eine Temperatur im Bereich von 200 bis 650°C aufweisenden unbewegten groben porösen Formkörper mit Chlor und gasförmigem Aluminiumchlorid innerhalb einer 200 bis 650°C heißen gasdurchströmten Reaktionszone, und
(3) Ableiten eines Gasstroms aus der Reaktionszone.

## Beschreibung

Die Erfindung betrifft ein Verfahren zur Abtrennung von Edelmetall aus groben porösen Formkörpern aus edelmetallhaltigem Refraktärmaterial.

US 2,860,045 offenbart die Abtrennung von Platin aus einem platinhaltigen Aluminiumoxidträgermaterial durch Inkontaktbringen mit gasförmigem Aluminiumchlorid gegebenenfalls in Kombination mit einem verdünnenden Trägergas wie Helium, Stickstoff, Chlor, Kohlendioxid, Luft, Kohlenmonoxid usw. Die Beispiele der US 2,860,045 offenbaren neben gestaltlosem Aluminiumoxidträgermaterial auch solches in Gestalt von Pellets oder ungefähr 3 mm dicken Kugeln.

Edelmetallhaltige Heterogenkatalysatoren in Form grober poröser Formkörper aus edelmetallhaltigem Refraktärmaterial sind gebräuchlich. Nach einer bestimmten Betriebsdauer lässt die Aktivität solcher Heterogenkatalysatoren nach und sie müssen ersetzt werden. Auf Grund des hohen Edelmetallpreises ist eine Verwendung von edelmetallhaltigen Katalysatoren häufig nur dann wirtschaftlich, wenn das verwendete Edelmetall zurückgewonnen werden kann. Typischer Weise werden verbrauchte edelmetallhaltige Heterogenkatalysatoren auf Basis grober poröser Formkörper aus Refraktärmaterial zwecks Aufarbeitung zu Pulver zermahlen und das Edelmetall anschließend nasschemisch heraus gelöst oder man bedient sich der in US 2,860,045 offenbarten Verfahrensweise. Alternativ kann eine Trennung in Edelmetall und Refraktärmaterial schmelzmetallurgisch erfolgen. Bei diesen bekannten Methoden werden die Formkörper zerstört. Da jedoch auch die Formkörper als solche aufwändig in der Herstellung sein können, ist es wünschenswert, nicht nur das Edelmetall wiederzugewinnen, sondern auch die Formkörper und diese erneut mit Edelmetall ausstatten zu können.

Es bestand die Aufgabe, ein Verfahren zu finden, mit dem Edelmetall effizient und zerstörungsfrei aus groben porösen Formkörpern aus edelmetallhaltigem Refraktärmaterial abgetrennt werden kann. Insbesondere soll Edelmetall schnell und praktisch vollständig aus großen Mengen solcher grober poröser Formkörper abgetrennt werden können, ohne dass es der Bemühung komplexer oder mehrstufiger chemischer Reaktionssysteme bedarf und ohne dass die groben porösen Formkörper beschädigt oder gar zerstört werden. Beispielsweise soll eine praktisch vollständige Abtrennung von Edelmetall aus 5 bis 3000 kg groben porösen Formkörpern aus edelmetallhaltigem Refraktärmaterial innerhalb einer Zeitdauer von weniger als 5 Stunden mittels des zu findenden Verfahrens möglich sein. Praktisch vollständige Abtrennung von Edelmetall bedeutet, dass der Edelmetallgehalt grober poröser Formkörper aus edelmetallhaltigem Refraktärmaterial von einem typischen Ausgangswert in einer Größenordnung von beispielsweise 0,01 bis 5 Gew.-% oder 0,1 bis 5 Gew.-% auf einen Restgehalt in einer Größenordnung von beispielsweise 10 bis 900 Gew.-ppm, insbesondere auf einen unter wirtschaftlichen Gesichtspunkten nicht weiter verringerbaren Restgehalt in einer Größenordnung von beispielsweise 10 bis 200 Gew.-ppm gesenkt wird.

Überraschenderweise kann die Aufgabe gelöst werden mit dem nachfolgend offenbarten erfindungsgemäßen Verfahren zur Abtrennung von Edelmetall aus groben porösen Formkörpern aus edelmetallhaltigem Refraktärmaterial. Das Verfahren umfasst die Schritte:
(1) Bereitstellen von groben porösen Formkörpern aus edelmetallhaltigem Refraktärmaterial,
(2) Inkontaktbringen der in Schritt (1) bereitgestellten, eine Temperatur im Bereich von 200 bis 650°C, bevorzugt 250 bis 600°C, insbesondere 300 bis 500°C aufweisenden unbewegten groben porösen Formkörper mit Chlor und gasförmigem Aluminiumchlorid innerhalb einer 200 bis 650°C, bevorzugt 250 bis 600°C, insbesondere 300 bis 500°C heißen gasdurchströmten Reaktionszone, und
(3) Ableiten eines Gasstroms aus der Reaktionszone.

Hierin wird der Begriff "grobe poröse Formkörper aus edelmetallhaltigem Refraktärmaterial" verwendet. In dem Zusammenhang bedeutet das Adjektiv "grob", dass es sich um Formkörper aus edelmetallhaltigem Refraktärmaterial mit Durchmessern oder Größen beispielsweise im Bereich von etwa 4 bis 30, bevorzugt 4 bis 20, insbesondere 4 bis 15 Millimetern handelt. Der Durchmesser der Formkörper an ihrer dicksten Stelle liegt dabei beispielsweise im Bereich von 4 bis 30, bevorzugt 4 bis 20, insbesondere 4 bis 15 Millimetern. Das Adjektiv "porös" bedeutet hier, dass die Formkörper aus edelmetallhaltigem Refraktärmaterial innere Poren haben mit einer Porengröße im Bereich von beispielsweise 0,5 nm bis 100 µm.

Hierin werden die Begriffe "Edelmetall" bzw. "edelmetallhaltig" verwendet. Soweit nicht anders bemerkt, beziehen sich diese Begriffe auf ein einziges Edelmetall oder eine Kombination verschiedener Edelmetalle, jeweils ausgewählt aus der Gruppe bestehend aus Silber, Gold, Rhenium, Ruthenium, Osmium, Iridium, Platin, Palladium und Rhodium, insbesondere ausgewählt aus der Gruppe bestehend aus Platin, Palladium und Rhodium.

Hierin wird der Begriff "Refraktärmaterial" verwendet. Bei Refraktärmaterial bzw. refraktärem Material handelt es sich um anorganisches nichtmetallisches und gegenüber einer Einwirkung von Chlor und Aluminiumchlorid bei hohen Temperaturen beispielsweise im Bereich von 200 bis 650 °C widerstandsfähigem, d.h. sich dabei physikalisch und chemisch nicht oder praktisch nicht veränderndem Material. Beispielsweise kann es sich dabei um keramische Refraktärmaterialien handeln. Geeignete refraktäre Materialien können beispielsweise ausgewählt sein aus der Gruppe bestehend aus Aluminiumoxiden wie α- oder γ-Aluminiumoxid, Titandioxid, Siliziumdioxid, Magnesiumoxid, Zirkonoxiden, Mischoxiden wie Cer/Zirkon-Mischoxiden, Silikaten wie z.B. Aluminiumsilikaten (z.B. Cordierit, Mullit, Zeolithe), Titanaten wie z.B. Aluminiumtitanat, Bleizirkonattitanat und Bariumtitanat, Siliziumcarbiden und Siliziumnitriden. Die Refraktärmaterialien können dotiert sein, beispielsweise mit Nichtedelmetallen. Die Refraktärmaterialien als solche sind von Hause aus edelmetallfrei. Die Refraktärmaterialien können alleine oder in Kombination vorliegen, beispielsweise in Formkörper-interner Kombination oder als Mischungen verschiedener grober poröser Formkörper.

Den hierin verwendeten Begriff "edelmetallfrei" versteht der Fachmann als edelmetallfrei bis auf einen für ein betreffendes Material technisch praktisch unvermeidbaren Edelmetall- bzw. Edelmetallrestgehalt beispielsweise im Bereich von >0 bis 10 Gew.-ppm.

Die Formkörper an sich können zum Beispiel die Form von Strängen, Zylindern, Pellets, Ringen, Multi-Loch-Ringen, Kugeln, Sattelkörpern, Rädern, Sesseln, Quader, Plättchen, Schaumkörpern oder Waben haben. Die Formkörper können mit den üblichen Techniken wie beispielsweise Extrusion oder Pressen hergestellt sein.

Mithin steht der Begriff "grobe poröse Formkörper aus edelmetallhaltigem Refraktärmaterial" für Refraktärmaterial in Gestalt grober poröser Formkörper, deren Oberfläche innerer Poren (innere Porenoberfläche) mit Edelmetall ausgestattet ist. Gegebenenfalls ist auch die äußere Oberfläche der groben porösen Formkörper aus edelmetallhaltigem Refraktärmaterial mit Edelmetall ausgestattet. In einer bevorzugten Ausführungsform ist nur die Oberfläche der inneren Poren mit Edelmetall ausgestattet. Mit anderen Worten, das Refraktärmaterial der groben porösen Formkörper dient als Edelmetall-Trägermaterial; die Oberfläche der inneren Poren sowie gegebenenfalls auch die äußere Oberfläche dient dabei als Edelmetall-Träger.

In einer bevorzugten Ausführungsform des erfindungsgemäßen Verfahrens wird das Inkontaktbringen bzw. die Behandlung der groben porösen Formkörper aus edelmetallhaltigem Refraktärmaterial mit Chlor und gasförmigem Aluminiumchlorid während Schritt (2) bewirkt, indem es sich bei dem die Reaktionszone durchströmenden Gas um einen Strom eines Gasgemisches umfassend oder im Wesentlichen bestehend aus gasförmigem Aluminiumchlorid, Chlor und gegebenenfalls Inertgas handelt. Das erfindungsgemäße Verfahren umfasst dann die Schritte:
(1) Bereitstellen von groben porösen Formkörpern aus edelmetallhaltigem Refraktärmaterial,
(2) Inkontaktbringen der in Schritt (1) bereitgestellten, eine Temperatur im Bereich von 200 bis 650°C, bevorzugt 250 bis 600°C, insbesondere 300 bis 500°C aufweisenden unbewegten groben porösen Formkörper mit einem Strom eines Gasgemisches umfassend oder im Wesentlichen bestehend aus gasförmigem Aluminiumchlorid, Chlor und gegebenenfalls Inertgas innerhalb einer 200 bis 650°C, bevorzugt 250 bis 600°C, insbesondere 300 bis 500°C heißen Reaktionszone, und
(3) Ableiten eines Gasstroms aus der Reaktionszone.

In Schritt (1) des erfindungsgemäßen Verfahrens werden grobe poröse Formkörper aus edelmetallhaltigem Refraktärmaterial bereitgestellt, beispielsweise in Form einer Art oder einer Mischung mehrerer verschiedener Arten grober poröser Formkörper aus edelmetallhaltigem Refraktärmaterial.

Der Edelmetallgehalt der in Schritt (1) bereitgestellten groben porösen Formkörper aus edelmetallhaltigem Refraktärmaterial liegt beispielsweise im Bereich von 0,01 bis 5 Gew.-% oder bevorzugt im Bereich von 0,1 bis 5 Gew.-%, jeweils bezogen auf die Gesamtmenge der bereitgestellten groben porösen Formkörper aus edelmetallhaltigem Refraktärmaterial.

Insbesondere handelt es sich bei den groben porösen Formkörpern aus edelmetallhaltigem Refraktärmaterial um edelmetallhaltigen Heterogenkatalysator, insbesondere um verbrauchten edelmetallhaltigen Heterogenkatalysator. Edelmetallhaltiger Heterogenkatalysator kann verschiedensten Quellen entstammen. Beispielsweise kann es sich bei verbrauchtem edelmetallhaltigem Heterogenkatalysator um verbrauchten Abluftreinigungskatalysator; verbrauchten Abgasreinigungskatalysator; verbrauchten Verbrennungsabgasreinigungskatalysator; verbrauchten Dieselpartikelfilter; verbrauchte zur Reingasherstellung verwendete Katalysatoren; und/oder verbrauchte Prozesskatalysatoren handeln. Beispiele für Prozesskatalysatoren sind Fischer-Tropsch-Katalysatoren, Reforming-Katalysatoren, in der Produktion von Ethylenoxid eingesetzte Katalysatoren und Hydrierungskatalysatoren.

Verbrauchte edelmetallhaltige Heterogenkatalysatoren in Form grober poröser Formkörper aus edelmetallhaltigem Refraktärmaterial können von Hause aus hinreichend frei von störenden Verunreinigungen vorliegen, so dass sie unmittelbar gemäß Schritt (2) des erfindungsgemäßen Verfahrens behandelt werden können. Anderenfalls können sie zunächst mittels geeigneter dem Fachmann bekannter Methoden von unerwünschten Verunreinigungen befreit werden, beispielsweise durch Kalzinieren mit oder ohne Luftzutritt. Gegebenenfalls kann eine Reduktionsbehandlung, beispielsweise eine thermische Behandlung in reduzierender Atmosphäre durchgeführt werden, um nicht in elementarer Form sondern beispielsweise als Edelmetalloxid im edelmetallhaltigen Refraktärmaterial der groben porösen Formkörper vorliegendes Edelmetall ins elementare Edelmetall zu überführen.

In Schritt (2) des erfindungsgemäßen Verfahrens werden die in Schritt (1) bereitgestellten, eine Temperatur im Bereich von 200 bis 650°C, bevorzugt 250 bis 600°C, insbesondere 300 bis 500°C aufweisenden unbewegten groben porösen Formkörper aus edelmetallhaltigem Refraktärmaterial mit Chlor und gasförmigem Aluminiumchlorid und gegebenenfalls Inertgas innerhalb einer 200 bis 650°C, bevorzugt 250 bis 600°C, insbesondere 300 bis 500°C heißen gasdurchströmten Reaktionszone in Kontakt gebracht.

Beispiele für geeignete Inertgase sind insbesondere Stickstoff und Edelgase wie Argon.

Gemeinsam stellen das Chlor und das gasförmige Aluminiumchlorid Wirkkomponenten dar.

Chlor, das optionale Inertgas und gasförmiges Aluminiumchlorid können jeweils einzeln und/oder gemischt in die Reaktionszone eingeleitet werden. Die Gase können insbesondere vorgeheizt in die Reaktionszone eingeleitet werden. Gasförmiges Aluminiumchlorid kann auch in situ aus mit den groben porösen Formkörpern aus edelmetallhaltigen Refraktärmaterial vermischtem festem Aluminiumchlorid gebildet werden.

Die groben porösen Formkörper aus edelmetallhaltigem Refraktärmaterial werden während ihrer Behandlung mit Chlor und gasförmigem Aluminiumchlorid in Schritt (2) nicht bewegt, um die Formkörper mechanisch zu schonen und eine Bildung von Abrieb oder Beschädigungen der Formkörper zumindest weitgehend auszuschließen. Die groben porösen Formkörper aus edelmetallhaltigem Refraktärmaterial können während Schritt (2) beispielsweise als unbewegte Schüttung vorliegen. Entsprechend behutsam wird der Fachmann den Gasstrom einstellen und verhindern, dass die Formkörper während Schritt (2) bewegt werden.

In Schritt (2) der bevorzugten Ausführungsform des erfindungsgemäßen Verfahrens wird die 200 bis 650°C, bevorzugt 250 bis 600°C, insbesondere 300 bis 500°C heiße Reaktionszone mit einem Strom eines Gasgemischs umfassend oder im Wesentlichen bestehend aus gasförmigem Aluminiumchlorid, Chlor und gegebenenfalls Inertgas durchströmt. Bevorzugt wird das Gasgemisch 200 bis 650°C, bevorzugt 250 bis 600°C, insbesondere 300 bis 500°C heiß, d.h. entsprechend vorgeheizt in die 200 bis 650°C, bevorzugt 250 bis 600°C, insbesondere 300 bis 500°C heiße Reaktionszone eingeleitet. Das Gasgemisch kann separat erzeugt werden. Das Gasgemisch umfasst gasförmiges Aluminiumchlorid, Chlor und gegebenenfalls Inertgas, bevorzugt besteht es im Wesentlichen aus gasförmigem Aluminiumchlorid, Chlor und gegebenenfalls Inertgas. Bevorzugt ist Inertgas im Gasgemisch enthalten. Der Gewichtsanteil des gasförmigen Aluminiumchlorids im Gasgemisch liegt beispielsweise im Bereich von 10 bis 80 Gew.-%, bevorzugt 30 bis 70 Gew.-%, der von Chlor beispielsweise im Bereich von 10 bis 40 Gew.-%, bevorzugt 15 bis 30 Gew.-% und der des Inertgases beispielsweise im Bereich von 0 bis 80 Gew.-%, bevorzugt 10 bis 50 Gew.-%.

Die Reaktionszone ist 200 bis 650°C, bevorzugt 250 bis 600°C, insbesondere 300 bis 500°C heiß. Alle darin befindlichen Stoffe, d.h. Chlor, gasförmiges Aluminiumchlorid und die groben porösen Formkörper aus edelmetallhaltigem Refraktärmaterial, aber auch das optionale Inertgas und die sich in der Reaktionszone bildenden Reaktionsprodukte haben die dort herrschende Temperatur im Bereich von 200 bis 650 °C, bevorzugt 250 bis 600°C, insbesondere 300 bis 500°C bzw. nehmen diese an. Der die Reaktionszone durchströmende Gasstrom strömt mit einem Volumenstrom im Bereich von beispielweise 5 bis 15 Litern pro Stunde und pro kg grober poröser Formkörper aus edelmetallhaltigem Refraktärmaterial (d.h. pro kg in der Reaktionszone befindlicher grober poröser Formkörper aus edelmetallhaltigem Refraktärmaterial).

In der Reaktionszone herrscht im allgemeinen kein Überdruck, üblicherweise kann der Druck in einem Bereich von Atmosphärendruck bis zum 1,5-fachen dessen liegen.

Das Inkontaktbringen der in Schritt (1) bereitgestellten, eine Temperatur im Bereich von 200 bis 650°C, bevorzugt 250 bis 600°C, insbesondere 300 bis 500°C aufweisenden groben porösen Formkörper aus edelmetallhaltigem Refraktärmaterial mit Chlor und gasförmigem Aluminiumchlorid innerhalb der 200 bis 650°C, bevorzugt 250 bis 600°C, insbesondere 300 bis 500°C heißen gasdurchströmten Reaktionszone kann schon während des Aufheizens der groben porösen Formkörper aus edelmetallhaltigem Refraktärmaterial beginnen oder erst nach Erreichen der gewünschten Temperatur in den groben porösen Formkörpern aus edelmetallhaltigem Refraktärmaterial.

Schritt (2) und gegebenenfalls auch das Aufheizen der groben porösen Formkörper aus edelmetallhaltigem Refraktärmaterial kann beispielsweise in einem Rohrofen bzw. im Ofenraum eines Rohrofens stattfinden. Zweckmäßigerweise hat der Rohrofen gegenüber Chlor und Aluminiumchlorid bei 200 bis 650 °C widerstandsfähige Innenwände bzw. Innenauskleidungen, beispielsweise aus Quarzglas, Nickelbasislegierung (beispielsweise Hastelloy® C) oder geeignetem anorganischem nichtmetallischem Refraktärmaterial wie beispielsweise Graphit. Den Rohrofen bzw. die Dimensionen des Rohrofens wird der Fachmann angepasst an die zu behandelnde Menge der groben porösen Formkörper aus edelmetallhaltigem Refraktärmaterial wählen.

Die Kontakt- bzw. Behandlungsdauer der groben porösen Formkörper aus edelmetallhaltigem Refraktärmaterial mit Chlor und gasförmigem Aluminiumchlorid innerhalb der heißen gasdurchströmten Reaktionszone wird üblicherweise so gewählt, dass eine Abtrennung des Edelmetalls aus den groben porösen Formkörpern aus edelmetallhaltigem Refraktärmaterial bis zum gewünschten Restgehalt oder bis zur Befreiung vom Edelmetall gewährleistet ist (vgl. vorerwähnte Definition von "edelmetallfrei"). Üblicherweise liegt die dazu notwendige Kontakt- bzw. Behandlungsdauer im Bereich von beispielsweise 10 bis 240 Minuten, insbesondere 15 bis 120 Minuten.

Zweckmäßigerweise wird der Raum, in dem das Aufheizen der groben porösen Formkörper aus edelmetallhaltigem Refraktärmaterial stattfindet, auch als Reaktionszone genutzt. Mit anderen Worten, es ist bevorzugt, die groben porösen Formkörper aus edelmetallhaltigem Refraktärmaterial in der Reaktionszone aufzuheizen. Bevorzugte Reaktionszone ist demnach beispielsweise das Innere des vorstehend schon als mögliches Arbeitsmittel offenbarten Rohrofens, mit anderen Worten, der Rohrofenraum.

Die Reaktionszone beherbergt ein an sich einfaches Reaktionssystem, welches die Reaktanden Edelmetall, Chlor und gasförmiges Aluminiumchlorid umfasst bzw. im Wesentlichen aus diesen besteht. Der die Reaktionszone durchströmende Gasstrom strömt über und auch durch die groben porösen Formkörper aus edelmetallhaltigem Refraktärmaterial hindurch. Bei den in der Reaktionszone vorherrschenden Temperaturen im Bereich von 200 bis 650°C, bevorzugt 250 bis 600°C, insbesondere 300 bis 500°C bilden sich gasförmige Aluminium, Chlor und Edelmetall enthaltende Verbindungen, vermutlich Aluminium und Edelmetall enthaltende Chloridokomplexe. Die gasförmigen Aluminium, Chlor und Edelmetall enthaltenden Verbindungen werden mit dem in Schritt (3) aus der Reaktionszone abgeleiteten heißen Gasstrom mitgeführt.

Überraschenderweise erlaubt das erfindungsgemäße Verfahren die eingangs als Aufgabenstellung formulierte effiziente und zerstörungsfreie Abtrennung von Edelmetall aus groben porösen Formkörpern aus edelmetallhaltigem Refraktärmaterial, und zwar nicht nur mit Bezug auf die Behandlung großer Mengen der groben porösen Formkörper aus edelmetallhaltigem Refraktärmaterial in kurzer Zeit, sondern auch in Hinblick auf das Erreichen eines gleichmäßig niedrigen Edelmetallrestgehalts in den erfindungsgemäß behandelten groben porösen Formkörpern aus edelmetallhaltigem Refraktärmaterial bei Betrachtung auf Einzelformkörperebene. Das erfindungsgemäße Verfahren erlaubt bis zu mehr als 99 Gew.-% des ursprünglich auf bzw. in den groben porösen Formkörpern aus edelmetallhaltigem Refraktärmaterial vorhandenen Edelmetalls zu entfernen. Insbesondere war nicht zu erwarten, dass das erfindungsgemäße Verfahren mit derartigen groben porösen Formkörpern aus edelmetallhaltigem Refraktärmaterial erfolgreich durchgeführt werden kann.

Mit dem erfindungsgemäßen Verfahren können neben dem entfernten Edelmetall auch die groben porösen Formkörper aus dann edelmetallfreiem Refraktärmaterial wiedergewonnen werden, die erneut zu groben porösen Formkörpern aus edelmetallhaltigem Refraktärmaterial verarbeitet werden können. Die Bildung unerwünschten Abriebs von Refraktärmaterial kann im Wesentlichen vermieden werden. Beispielsweise liegt der im erfindungsgemäßen Verfahren entstandene an sich unerwünschte Abrieb in einem Bereich von nur 0,01 bis 0,1 Gew.-% bezogen auf die in Schritt (1) des erfindungsgemäßen Verfahrens bereitgestellten groben porösen Formkörper aus edelmetallhaltigem Refraktärmaterial.

In Schritt (3) wird ein Gasstrom, d.h. der Gasstrom, der die Reaktionszone durchströmt bzw. durchströmt hat, bei Verlassen der Reaktionszone aus dieser abgeleitet. Der Gasstrom verlässt die 200 bis 650°C, bevorzugt 250 bis 600°C, insbesondere 300 bis 500°C heiße Reaktionszone mit entsprechender Temperatur und kann in einen die Bildung und Abscheidung festen Edelmetallchlorids gestattenden kälteren Bereich abgeleitet werden, beispielsweise in einen Bereich mit gegenüber den Bestandteilen des Gasstroms widerstandsfähigen inneren Oberflächen und mit niedrigeren Temperaturen als die in der Reaktionszone herrschenden. Beispielsweise können besagte niedrigere Temperaturen im Bereich von beispielsweise 180 bis < 300 °C liegen. Bei diesen niedrigeren Temperaturen zerfallen die vom Gasstrom mitgeführten Aluminium, Chlor und Edelmetall enthaltenden Verbindungen unter Freisetzung von sich abscheidendem Edelmetallchlorid, während Inertgas, unverbrauchtes Chlor und gasförmiges Aluminiumchlorid weitergeleitet werden, beispielsweise in einen Gaswäscher. Alternativ kann der vom Edelmetall bzw. Edelmetallchlorid befreite bzw. abgereicherte Gasstrom der Reaktionszone im Sinne einer Kreislaufführung wieder zugeführt werden. Vor Einspeisung in die Reaktionszone kann die gewünschte Gaszusammensetzung durch Zufuhr infolge Chlorverbrauch fehlender Anteile von Chlor und gegebenenfalls auch Aluminiumchlorid angepasst werden.

Insbesondere abhängig von der Art der in Schritt (1) bereitgestellten groben porösen Formkörper aus edelmetallhaltigem Refraktärmaterial kann das abgeschiedene Edelmetallchlorid sortenrein sein oder als Gemisch verschiedener Edelmetallchloride anfallen. Beispiele für Edelmetallchloride sind PtCl₂, PdCl₂ und RhCl₃. Das oder die abgeschiedenen Edelmetallchloride können einer üblichen Aufbereitung, beispielsweise einer nasschemischen Aufbereitung zugeführt werden.

### Beispiele

### Beispiel 1

Eine Schüttung von 6000 g Katalysatorformkörpern (1 cm lange Hohlzylinder mit 1 cm Außendurchmesser und einem Innendurchmesser des zylindrischen Hohlraums von 0,3 cm, Trägermaterial poröses Aluminiumoxid, innere Poren ausgestattet mit Palladium, Palladiumgehalt der Formkörper 0,5 Gew.-%) wurde in einem Rohrofen (1 m lange zylindrische 400°C heiße Reaktionszone mit einem Durchmesser von 15 cm) 60 Minuten lang mit einem durch die Reaktionszone strömenden Gasgemisch (67 Gew.-% gasförmiges Aluminiumchlorid, 18 Gew.-% Chlor, 15 Gew.-% Stickstoff) behandelt. Der Volumenstrom des Gasgemischs betrug 70 Liter/h. Die Katalysatorformkörper wurden während der Behandlung nicht bewegt. Aus dem die Reaktionszone verlassenden Gas wurden in einer 200 °C heißen Zone 99,9% des in den Katalysatorformkörpern ursprünglich enthaltenen Palladiums als PdCl₂ abgeschieden und zurückgewonnen (bestimmt mittels ICP-OES); 0,1% des in den Katalysatorformkörpern ursprünglich enthaltenen Palladiums verblieben im Katalysatormaterial (bestimmt mittels ICP-MS nach nasschemischem Aufschluss des Palladium-abgereicherten Katalysators). Die Palladium-abgereicherten Katalysatorformkörper wurden mit Wasser gespült und die entstandene Suspension filtriert. Der den Abrieb darstellende getrocknete Filterrückstand wurde gewogen. Er betrug lediglich 3,8 g.

## Patentansprüche

1. Verfahren zur Abtrennung von Edelmetall aus groben porösen Formkörpern aus edelmetallhaltigem Refraktärmaterial umfassend die Schritte:
(1) Bereitstellen von groben porösen Formkörpern aus edelmetallhaltigem Refraktärmaterial,
(2) Inkontaktbringen der in Schritt (1) bereitgestellten, eine Temperatur im Bereich von 200 bis 650°C aufweisenden unbewegten groben porösen Formkörper mit Chlor und gasförmigem Aluminiumchlorid innerhalb einer 200 bis 650°C heißen gasdurchströmten Reaktionszone, und
(3) Ableiten eines Gasstroms aus der Reaktionszone.

2. Verfahren nach Anspruch 1, wobei es sich bei dem die Reaktionszone durchströmenden Gas um einen Strom eines Gasgemisches umfassend oder bestehend aus gasförmigem Aluminiumchlorid, Chlor und gegebenenfalls Inertgas handelt.

3. Verfahren nach Anspruch 1 oder 2, wobei es sich bei dem Edelmetall der groben porösen Formkörper aus edelmetallhaltigem Refraktärmaterial um mindestens ein Edelmetall handelt ausgewählt aus der Gruppe bestehend aus Silber, Gold, Rhenium, Ruthenium, Osmium, Iridium, Platin, Palladium und Rhodium.

4. Verfahren nach einem der vorhergehenden Ansprüche, wobei der Edelmetallgehalt der in Schritt (1) bereitgestellten groben porösen Formkörper aus edelmetallhaltigem Refraktärmaterial im Bereich von 0,01 bis 5 Gew.-%, bezogen auf die Gesamtmenge der bereitgestellten groben porösen Formkörper aus edelmetallhaltigem Refraktärmaterial, liegt.

5. Verfahren nach einem der vorhergehenden Ansprüche, wobei die innere Porenoberfläche und die äußere Oberfläche der groben porösen Formkörper aus edelmetallhaltigem Refraktärmaterial mit Edelmetall ausgestattet ist.

6. Verfahren nach einem der Ansprüche 1 bis 4, wobei nur die innere Porenoberfläche der groben porösen Formkörper aus edelmetallhaltigem Refraktärmaterial mit Edelmetall ausgestattet ist.

7. Verfahren nach einem der vorhergehenden Ansprüche, wobei es sich bei den groben porösen Formkörpern aus edelmetallhaltigem Refraktärmaterial um edelmetallhaltigen Heterogenkatalysator handelt.

8. Verfahren nach einem der vorhergehenden Ansprüche, wobei die groben porösen Formkörper aus edelmetallhaltigem Refraktärmaterial während Schritt (2) als unbewegte Schüttung vorliegen.

9. Verfahren nach einem der vorhergehenden Ansprüche, wobei Schritt (2) und gegebenenfalls auch das Aufheizen der groben porösen Formkörper aus edelmetallhaltigem Refraktärmaterial in einem Rohrofen stattfindet.

10. Verfahren nach einem der vorhergehenden Ansprüche, wobei der Gewichtsanteil des gasförmigen Aluminiumchlorids im Gasgemisch im Bereich von 10 bis 80 Gew.-%, der von Chlor im Bereich von 10 bis 40 Gew.-% und der des Inertgases im Bereich von 0 bis 80 Gew.-% liegt.

11. Verfahren nach einem der vorhergehenden Ansprüche, wobei der die Reaktionszone durchströmende Gasstrom einen Volumenstrom im Bereich von 5 bis 15 Litern pro Stunde und pro kg grober poröser Formkörper aus edelmetallhaltigem Refraktärmaterial aufweist.

12. Verfahren nach einem der vorhergehenden Ansprüche, wobei die Kontaktdauer der groben porösen Formkörper aus edelmetallhaltigem Refraktärmaterial mit Chlor und gasförmigem Aluminiumchlorid innerhalb der heißen gasdurchströmten Reaktionszone 10 bis 240 Minuten beträgt.

13. Verfahren nach einem der vorhergehenden Ansprüche, wobei der aus der Reaktionszone abgeleitete Gasstrom in einen die Bildung und Abscheidung festen Edelmetallchlorids gestattenden kälteren Bereich abgeleitet wird.
